# EUROPÄISCHE PATENTSCHRIFT

(11) **EP 2 327 312 B1**
(45) Veröffentlichungstag und Bekanntmachung des Hinweises auf die Patenterteilung: **01.03.2017**
(21) Anmeldenummer: 10192005.6
(22) Anmeldetag: 22.11.2010
(51) Int. Cl.: A23C 15/02

(54) **Optimierung eines Butterungsverfahrens bei kleinen Zulaufmengen an Rahm**
Optimisation of a butter-making method with small amounts of cream
Optimisation d'un procédé de barattage pour petites quantités d'amenée de crème

(30) Priorität: 25.11.2009 DE 102009055783
(43) Veröffentlichungstag der Anmeldung: 01.06.2011
(73) Patentinhaber: GEA Mechanical Equipment GmbH, 59302 Oelde (DE)
(72) Erfinder: Klapper, Siegfried, 33442, Herzebrock-Clarholz (DE); Hinze, Heinz, 59269, Beckum (DE)
(74) Vertreter: Kleine, Hubertus

(56) Entgegenhaltungen:
- WO-A1-81/01788
- WO-A2-2011/023802
- DE-A1- 4 412 269
- DE-C1- 3 529 677
- GB-A- 2 195 352
- US-A- 3 109 740
- US-A- 3 324 551

## Beschreibung

Die Erfindung beschreibt ein Butterungsverfahren nach dem Oberbegriff des Anspruchs 1.

Einen gattungsgemäßen Stand der Technik zeigt die DE 35 29 677 C1.

Auf dem Bereich der industriellen Butterungsverfahren hat sich die kontinuierliche Butterung mit einer Maschine nach Dr. Fritz aus dem Jahr 1941 durchgesetzt. Durch diese Maschine und das entsprechende Verfahren wurde eine gute und gleichmäßige Qualität der Butter bei geringen Fettverlusten sichergestellt.

Aufgrund des Fritz/Eisenreich - Verfahrens konnten die Arbeitsschritte der Schlagsahnebildung, der anschließenden Butterkornbildung mit Kühlung durch Buttermilch, des Abtrennens von Buttermilch und des Knetens der Butter automatisiert werden. Dabei wurden die Prozesse der Butterkornbildung von Butterungstrommeln und das Kneten der Buttermasse von Abpressern mit motorisierten Schneckenantrieben gewährleistet.

In diesem Verfahren hängt jedoch die Zugabemenge des Rahms von der jeweiligen Dimensionierung der Butterungsmaschine ab.

Die Erfindung setzt daher bei der Aufgabe an, eine Verfeinerung der Automatisierung auch bei geringen Rahmmengen in einem dauerhaften störungsfreien Betrieb der Butterungsmaschine bei optimaler Abbutterung zu sichern.

Die Erfindung löst die Aufgabe mit den Merkmalen des Anspruchs 1.

Vorteilhafte Ausgestaltungen der Erfindung sind den Unteransprüchen zu entnehmen.

Dabei weist ein Verfahren zur Herstellung von Butter in einer Butterungsmaschine mit mindestens einen Einlauf, einen Butterungszylinder mit einem drehbaren Schläger, und einen Ablauf, folgende Schritte auf:
a. Zugeben von Rahm am Einlauf;
b. Erfassen der zugegebenen Rahmmenge; und
c. Zugeben von zusätzlicher Buttermilch zu der zugegebenen Rahmmenge, wenn sich die zugegebene Rahmmenge als nicht ausreichend für den Betrieb der Butterungsmaschine erweist,
d. wobei das Zugeben von zusätzlicher Buttermilch im Schritt c) durch Rückführen von Buttermilch aus einem Sammelbehälter (5) zum Rücklauf (1) erfolgt und
e. wobei beim Rückführen von Buttermilch aus dem Sammelbehälter in den Butterungszylinder ein Istwert der Durchflussrate mit einem Durchflussmesser ermittelt wird und die Durchflußrate mittels eines Ventils an einen Sollwert angepasst wird.

Derart wird bei Zuführung der Buttermilch der Fettgehalt reduziert. Somit wird eine erhöhte Leistungseinbringung über den Butterungszylinder benötigt, so dass eine Butterung auch bei einer geringen Zulaufmenge an Rahm, bzw. einer für die Butterungsmaschine an sich nicht ausreichenden Zulaufmenge an Rahm nach dem erfindungsgemäßen Verfahren erfolgen kann.

Weiterhin werden bei dem erfindungsgemäßen Verfahren die Qualitätsanforderungen auch bei stark reduzierten Durchsatzmengen eingehalten.

Es ist vorteilhaft, wenn das Verfahren weiterhin folgende Schritte umfasst:
f. Umwandeln des Rahm in Butterkorn und Buttermilch im Anschluss an die Schritte a-c im Butterungszylinder;
g. Kühlen des Butterkorns und der Buttermilch in einer Kühlsektion;
h. Trennen der Buttermilch und des Butterkorn in einer Nachhutterungstrommel;
i. Befreien des Butterkorns von Buttermilchresten in einem Abpresser;
   und
j. Sammeln der Buttermilch in dem Sammelbehälter.

Durch das Sammeln der Buttermilch in dem Sammelbehälter steht die im Butterungsverfahren abgetrennte Buttermilch für die Zugabe zu einer geringen Rahmmenge zur Verfügung. Somit entstehen keine zusätzlichen Kosten, da die zusätzlich eingebrachte Buttermilch bei der vorhergehenden Butterung gesammelt wird

Es ist zudem von Vorteil, wenn abgetrennte Buttermilchreste vom Abpresser in die Nachbutterungstrommel rückgeführt werden, so dass die Buttermilch möglichst vollständig gesammelt werden kann.

Ein Zugeben von zusätzlicher Buttermilch gemäß Schritt c), unter Verwendung der im Prozess anfallenden Buttermilch, erfolgt erfindungsgemäß besonders vorteilhaft durch Rückführen von Buttermilch aus dem Sammelbehälter zum Einlauf. Dabei wird ein Teilstrom dieser Buttermilch zur Kühlung des Butterkorns genutzt.

Vorteilhaft kann die Durchflussrate von einem Istwert auf einen Sollwert beim Rückführen der Buttermilch derart eingestellt werden, dass eine zusätzliche Leistungsanpassung der Butterungsmaschine an die zugegebene Rahmmenge erfolgt, welche beispielsweise durch eine entsprechende Drehzahländerung am Schläger nicht oder nur begrenzt möglich wäre.

Das Zugeben einer bestimmten Menge an Buttermilch in Abhängigkeit von der Rahmmenge in Schritt c) und unter Beachtung der Durchflussrate kann vorteilhaft mit einem Durchflussregulierventil erfolgen.

In dem Verfahren wird eine variable Drehzahlregelung des Schlägers mit der Zugabe einer zusätzlichen Buttermilchmenge derart vorteilhaft kombiniert, dass für die Optimierung und Leistungsanpassung im Butterungsprozess beide Prozessgrößen aufeinander abgestimmt werden.

Ein Ausführungsbeispiel der Erfindung wird anhand der beigefügten Zeichnung erläutert.

Sie zeigen:

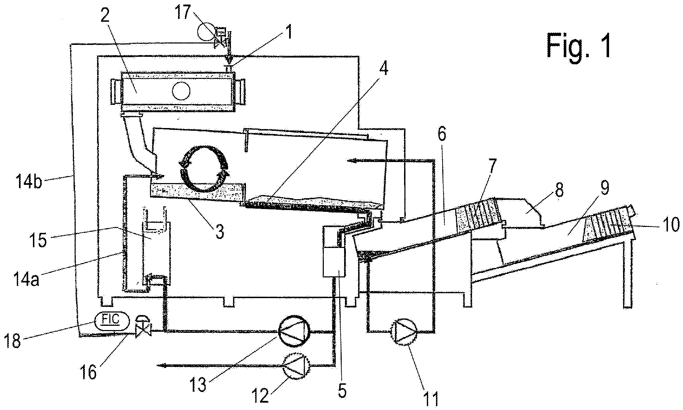

- Fig. 1: eine schematische Darstellung einer Butterungsmaschine, die nach dem erfindungsgemäßen Verfahren betrieben wird,

Fig. 1 zeigt eine Butterungsmaschine, die einen Einlauf 1 für Rahm aufweist, sowie einen Butterungszylinder 2 mit einem drehbar angetriebenen Schläger für die Bildung von Butterkorn und Buttermilch aus zugeführtem Rahm.

In einer Kühlsektion 3 erhält das Butterkorn eine härtere Konsistenz und lässt sich anschließend besser bearbeiten.

In einer Nachbutterungstrommel 4 wird im Nachbutterungsprozess die optimale Butterkorngröße eingestellt.

Die Buttermilch wird in der Nachbutterungstrommel 4 vom Butterkorn getrennt und in ein Sammelbehältnis 5 überführt.

Ein Abpresser 6 wandelt das Butterkorn in eine homogene "Wasser in Öl Emulsion" um und befreit gleichzeitig die Butter von Buttermilchresten, welche sich im Abpresser 6 sammeln und durch die Buttermilchpumpe 11 in die Nachbutterungstrommel 4 rückgeführt werden.

In einer Mischzone 7 werden zu der Butter Wasser, saure Kulturkonzentrate und Salzlake zudosiert, um den Geschmack und die Konsistenz der Butter zu optimieren.

In einer Vakuumkammer 8 wird der Butter Luft entzogen, um Schichtenbildung zu vermeiden.

Ein weiterer Abpresser 9 sorgt zusammen mit einer sich daran anschließenden Mischzone 10 für eine gleichmäßige Tröpfchengrößen-Verteilung des Wassergehaltes in der Butter und eine Optimierung des Wassergehaltes.

Mit einer Austragspumpe wird der Ablauf der fertigen Butter aus der Maschine gewährleistet.

Aus dem Sammelbehälter 5 kann die Buttermilch mittels einer zweiten Buttermilchpumpe 12 aus dem Butterungsprozess abgeführt werden.

Mit einer dritten Buttermilchpumpe 13 kann Buttermilch aus dem Sammelbehälter 5 in den Butterungsprozess rückgeführt werden.

Die Rückführung kann über die Buttermilchleitung 14a in die Nachbutterungstrommel 4 erfolgen, wobei die Buttermilch durch ein Kühlaggregat 15 zusätzlich gekühlt wird.

Die Rückführung kann jedoch auch über die Buttermilchleitung 14b erfolgen, welche am Einlauf 1 des Butterungszylinders 2 mündet. Dabei weist die Buttermilchleitung 14b zwei Ventile 16 und 17 auf, mit welchen die Menge der Buttermilchzugabe am Einlauf 1 gezielt zugegeben werden kann.

Die Durchflussmenge an Buttermilch wird dabei durch einen Durchflussmesser 18 bestimmt.

Bei der Durchführung einer Butterung nach dem erfindungsgemäßen Verfahren kann bei niedrigen Rahmzulaufmengen eine zusätzliche Leistungsoptimierung des Butterungsprozesses vorgenommen werden. Zudem sind die üblichen Produktqualitäten und Produktionsstandzeiten bei der Butterung gewährleistet.

Die Leistungen für die unterschiedlichen Produktrezepturen oder die unterschiedlichen Abpackleistungen in möglichen nachfolgenden Prozessstufen können variabel eingestellt werden.

Dabei kann auf eine Butterungsmaschine, welche nach dem erfindungsgemäßen Verfahren betrieben wird ein CIP-Reinigungsverfahren angewandt werden.

Das Verfahren kann einfach gehandhabt werden und ist in bestehende Butterungsprozesse und in die Prozessautomation von bestehenden Butterungsmaschinen voll integrierbar.

### Bezugszeichen

| | |
|---|---|
| Einlauf | 1 |
| Butterungszylinder | 2 |
| Kühlsektion | 3 |
| Nachbutterungstrommel | 4 |
| Sammelbehälter | 5 |
| Abpresser | 6 |
| Mischzone | 7 |
| Vakuumkammer | 8 |
| Abpresser | 9 |
| Mischzone | 10 |
| Buttermilchpumpe | 11, 12, 13 |
| Buttermilchleitung | 14a, 14b |
| Kühlaggregat | 15 |
| Ventil | 16, 17 |
| Durchflussmesser | 18 |

## Patentansprüche

1. Verfahren zur Herstellung von Butter in einer Butterungsmaschine die mindestens einen Einlauf (1), einen Butterungszylinder (2) mit einem drehbaren Schläger, und einen Ablauf aufweist wobei das Verfahren folgende Schritte umfasst
a. Zugeben von Rahm am Einlauf (1);
b. Erfassen der zugegebenen Rahmmenge; und
c. Zugeben von zusätzlicher Buttermilch zu der zugegebenen Rahmmenge, wenn sich die zugegebene Rahmmenge als nicht ausreichend für den Betrieb der Butterungsmaschine erweist,
d. wobei das Zugeben von zusätzlicher Buttermilch im Schritt c) durch Rückführen von Buttermilch aus einem Sammelbehälter (5) zum Einlauf (1) erfolgt,
**dadurch gekennzeichnet, dass**
e. beim Rückführen von Buttermilch aus dem Sammelbehälter (5) in den Butterungszylinder (2) ein Istwert der Durchflussrate mit einem Durchflussmesser (18) ermittelt wird und die Durchflussrate mittels eines Ventils (16, 17) an einen Sollwert angepasst wird.

2. Verfahren nach Anspruch 1, **dadurch gekennzeichnet, dass** das Verfahren zudem folgende Schritte umfasst:
f. Umwandeln des Rahms in Butterkorn und Buttermilch im Anschluss an die Schritte a-c im Butterungszylinder (2);
g. Kühlen des Butterkorns durch Buttermilch in einer Kühlsektion (3);
h. Trennen der Buttermilch und des Butterkorns in einer Nachbutterungstrommel (4);
i. Befreien des Butterkorns von Buttermilchresten in einem Abpresser (6); und
j. Sammeln der Buttermilch in dem Sammelbehälter (5).

3. Verfahren nach Anspruch 2, **dadurch gekennzeichnet, dass** das Verfahren zudem folgende Schritte umfasst:
k. Rückführen von abgetrennten Buttermilchresten vom Abpresser (6) in die Nachbutterungstrommel (4).

4. Verfahren nach einem der vorhergehenden Ansprüche, **dadurch gekennzeichnet, dass** das Zugeben von zusätzlicher Buttermilch im Schritt c) durch Rückführen von Buttermilch aus dem Sammelbehälter (5) in die Nachbutterungstrommel (4) erfolgt.

5. Verfahren nach einem der vorhergehenden Ansprüche, **dadurch gekennzeichnet, dass** das Rückführen von Buttermilch mittels einer Buttermilchpumpe (13) erfolgt.

6. Verfahren nach einem der vorstehenden Ansprüche, **dadurch gekennzeichnet, dass** durch Anpassung der Durchflussrate auf einen Sollwert beim Rückführen der Buttermilch, eine Leistungsanpassung der Butterungsmaschine an die zugegebene Rahmmenge erfolgt.

7. Verfahren nach einem der vorhergehenden Ansprüche, **dadurch gekennzeichnet, dass** das Zugeben einer bestimmten Menge an Buttermilch zu der zugegebenen Rahmmenge in Schritt c) mittels eines Durchflussregulierventils erfolgt.

8. Verfahren nach einem der vorhergehenden Ansprüche, **dadurch gekennzeichnet, dass** das Zugeben von zusätzlicher Buttermilch in Abhängigkeit von einer variablen Regelung der Drehzahl des Schlägers erfolgt.

## Claims

1. Method for producing butter in a butter-making machine which has at least one inlet (1), a butter-making cylinder (2) with a rotatable paddle, and an outlet, the method comprising the following steps
a. adding cream at the inlet (1);
b. measuring the added quantity of cream; and
c. adding additional buttermilk to the added quantity of cream when the added quantity of cream proves to be insufficient for the operation of the butter-making machine,
d. the addition of additional buttermilk in step c) a being done by feeding back buttermilk from a collecting container (5) to the inlet (1),
**characterized in that**
e. when feeding back buttermilk from the collecting container (5) into the butter-making cylinder (2), a current value of the flow rate is determined by a flowmeter (18) and the flow rate is matched to a set point value by means of a valve (16, 17).

2. Method according to Claim 1, **characterized in that** the method additionally comprises the following steps:
f. converting the cream into butter granules and buttermilk following steps a-c in the butter-making cylinder (2);
g. cooling the butter granules by means of buttermilk in a cooling section (3);
h. separating the buttermilk and the butter granules in a butter-reforming drum (4);
i. freeing the butter granules from buttermilk residues in a press (6); and
j. collecting the buttermilk in the collecting container (5).

3. Method according to Claim 2, **characterized in that** the method additionally comprises the following steps:
k. feeding back separated buttermilk residues from the press (6) into the butter re-forming drum (4).

4. Method according to one of the preceding claims, **characterized in that** the addition of additional buttermilk in step c) is carried out by feeding back buttermilk from the collecting container (5) into the butter re-forming drum (4).

5. Method according to one of the preceding claims, **characterized in that** buttermilk is fed back by means of a buttermilk pump (13).

6. Method according to one of the preceding claims, **characterized in that**, by matching the flow rate to a set point value when feeding back the buttermilk, the output of the butter-making machine is matched to the added quantity of cream.

7. Method according to one of the preceding claims, **characterized in that** the addition of a specific quantity of buttermilk to the added quantity of cream in step c) is carried out by means of a flow regulating valve.

8. Method according to one of the preceding claims, **characterized in that** the addition of additional buttermilk is carried out on the basis of variable regulation of the rotational speed of the paddle.

## Revendications

1. Procédé de fabrication de beurre dans une baratte-malaxeuse qui comprend une entrée (1), un cylindre de barattage (2) avec une baratte rotative et une sortie, lequel procédé comprend les étapes suivantes :
a. apport de crème à l'entrée (1) ;
b. mesure de la quantité de crème apportée ; et
c. apport d'un supplément de babeurre à la crème apportée si la quantité de crème apportée s'avère insuffisante pour le fonctionnement de la baratte-malaxeuse,
d. l'apport de babeurre supplémentaire dans l'étape c) s'effectuant par le renvoi de babeurre d'un réservoir collecteur (5) à l'entrée (1),
**caractérisé en ce que**
e. lors du renvoi de babeurre du réservoir collecteur (5) au cylindre de barattage (2), une valeur réelle de débit est déterminée avec un débitmètre (18) et le débit est adapté à une valeur de consigne au moyen d'une vanne (16, 17).

2. Procédé selon la revendication 1, **caractérisé en ce qu'**il comprend en outre les étapes suivantes :
f. transformation de la crème en grains de beurre et babeurre après les étapes a) à c) dans le cylindre de barattage (2) ;
g refroidissement des grains de beurre par le babeurre dans une section de refroidissement (3) ;
h. séparation du babeurre et des grains de beurre dans un tambour de post-barattage (4) ;
i. élimination des restes de babeurre dans le beurre en grains dans un pressoir (6) ;
et
j. collecte du babeurre dans le réservoir collecteur (5).

3. Procédé selon la revendication 2, **caractérisé en ce qu'**il comprend en outre les étapes suivantes :
k. renvoi des restes de babeurre séparés du pressoir (6) au tambour de post-barattage (4).

4. Procédé selon l'une des revendications précédentes, **caractérisé en ce que** l'ajout de babeurre supplémentaire dans l'étape c) est effectué par le renvoi de babeurre du réservoir collecteur (5) vers le tambour de post-barattage (4).

5. Procédé selon l'une des revendications précédentes, **caractérisé en ce que** le renvoi de babeurre est effectué au moyen d'une pompe à babeurre (13).

6. Procédé selon l'une des revendications précédentes, **caractérisé en ce que** l'adaptation du débit à une valeur de consigne lors du renvoi du babeurre permet d'adapter le rendement de la baratte-malaxeuse à la quantité de crème apportée.

7. Procédé selon l'une des revendications précédentes, **caractérisé en ce que** l'ajout d'une certaine quantité de babeurre à la quantité de crème apportée dans l'étape c) est effectué au moyen d'une vanne de régulation du débit.

8. Procédé selon l'une des revendications précédentes, **caractérisé en ce que** l'ajout de babeurre supplémentaire est effectué en fonction d'une régulation variable de la vitesse de rotation de la baratte.
